# EUROPÄISCHE PATENTSCHRIFT

(11) **EP 4 140 691 B1**
(45) Veröffentlichungstag und Bekanntmachung des Hinweises auf die Patenterteilung: **26.03.2025**
(21) Anmeldenummer: 22186499.4
(22) Anmeldetag: 22.07.2022
(51) Int. Cl.: B29C 49/04, B29C 49/22, B29C 48/09, B65D 83/00, B29C 48/00, B29C 48/21, B29C 48/23, B29C 49/00, B32B 7/06, B29L 9/00, B29L 23/20, B29L 31/00, B29K 23/00, B29K 69/00, B29K 509/08, B65D 25/14, B65D 77/04, B67D 1/04, B29K 67/00

(54) **BEHÄLTER BESTEHEND AUS EINEM STEIFEN AUSSENBEHÄLTER UND EINEM VERFORMBAREN INNENBEUTEL SOWIE VERFAHREN ZUR HERSTELLUNG EINES DERARTIGEN BEHÄLTERS**
CONTAINER CONSISTING OF A RIGID OUTER CONTAINER AND A DEFORMABLE INNER BAG AND METHOD FOR MANUFACTURING SUCH A CONTAINER
RÉCIPIENT COMPOSÉ D'UN RÉCIPIENT EXTÉRIEUR RIGIDE ET D'UN SAC INTÉRIEUR DÉFORMABLE, AINSI QUE PROCÉDÉ DE FABRICATION D'UN TEL RÉCIPIENT

(30) Priorität: 23.08.2021 DE 102021121806
(43) Veröffentlichungstag der Anmeldung: 01.03.2023
(73) Patentinhaber: Gaplast GmbH, 82442 Altenau (DE)
(72) Erfinder: Kneer, Roland, 82490 Farchant (DE); Kneer, Stephan, 82490 Farchant (DE); Yilginc, Kasim, 82487 Oberammergau (DE)
(74) Vertreter: Flosdorff, Jürgen

(56) Entgegenhaltungen:
- EP-B1- 1 996 384
- EP-B1- 2 851 308
- CA-A1- 2 258 853
- CN-B- 108 674 772
- CN-B- 110 817 053
- US-A1- 2018 016 050
- US-B2- 10 364 087
- US-B2- 9 205 952

## Beschreibung

Die Erfindung betrifft ein Verfahren zur Herstellung eines Behälters bestehend aus einem steifen Außenbehälter und einem verformbaren Innenbeutel, der aus wenigstens zwei Schichten besteht, wobei die dem Außenbehälter zugewandte Materialschicht keine Schweißverbindung mit dem Material des Außenbehälters eingeht, wobei bei dem Verfahren ein erster Schneckenförderer einen ersten thermoplastischen Kunststoff für den Außenbehälter und wenigstens ein zweiter und ein dritter Schneckenförderer wenigstens einen zweiten und einen dritten Kunststoff für den Innenbeutel einem Extruder zuführen, der einen aus wenigstens der ersten, zweiten und dritten Schicht bestehenden Vorformling coextrudiert, der zwischen den geöffneten Hälften einer Blasform angeordnet wird, wobei die Blasform geschlossen wird, wenn der Vorformling die zur Herstellung des Behälters erforderliche Länge hat, wobei Überschussmaterial im Bodenbereich des herzustellenden Behälters abgequetscht und ein Steg aus Material des Außenbehälters ausgebildet wird, in dem die verschweißte Bodennaht des Innenbeutels eingeklemmt ist, und wobei der Vorformling durch ein Druckmedium zur Anlage an die Wandung der Blasform aufgeblasen, das überschüssige Material unter der Schweißnaht abgeschlagen und der Behälter aus der Blasform entnommen wird.

Ein derartiges Verfahren ist beispielsweise aus der DE 196 26 967 C2 bekannt. In dieser Druckschrift ist außerdem offenbart, dass wenigstens eine Wandöffnung in dem Außenbehälter dadurch ausgebildet wird, dass die Wand des Außenbehälters von einem Bohrer, Stichel oder einer Einstichnadel durchbohrt oder durchstoßen wird, wobei nach vollständiger Durchdringung der Wand des Außenbehälters ein Druckmedium gegen die Wand des Innenbeutels geblasen oder gespritzt wird, um diesen zurückzudrücken, damit er durch den Bohrer oder die Einstechnadeln nicht beschädigt wird. Durch diese Wandöffnung strömt bei Abgabe von Behälterinhalt aus dem Innenbeutel Umgebungsluft in den Zwischenraum zwischen dem Außenbehälter und dem Innenbeutel zum Druckausgleich ein.

Die verschiedenartigen thermoplastischen Kunststoffe des Außenbehälters und des Innenbeutels gehen zwar keine Schweißverbindung miteinander ein, sie haften aber aneinander, wenn der Behälter nach dem oben beschriebenen Verfahren im Coextrusionsverfahren hergestellt wird. Bevor ein derartiger Behälter verwendungsfähig ist, das heißt mit einer flüssigen oder beispielsweise pastösen Behälterinhalt gefüllt wird, der dann zum Beispiel mittels einer Airlesspumpe oder durch Zusammendrücken des Behälters allmählich abgegeben wird, muss der Innenbeutel von der Wand des Außenbehälters abgelöst und dann wieder an diese angelegt werden. Dies kann dadurch erfolgen, dass durch die Behälteröffnung ein Unterdruck auf den Innenbeutel aufgebracht wird, der sich daraufhin schlagartig zusammenzieht. Anschließend wird durch die Behälteröffnung Druckluft in den Innenbeutel eingeführt, um diesen wieder an den Außenbehälter anzulegen. Wenn der Innenbeutel nicht weitgehend gleichmäßig von der Wand des Außenbehälters abgelöst wird, tritt trotz Druckausgleichsöffnungen in der Wand des Außenbehälters in dem Innenbeutel bei Abgabe von Füllmaterial ein verhältnismäßig großer Unterdruck auf, wodurch die Funktionsfähigkeit einer meist vorgesehenen Pumpe beeinträchtigt werden kann.

In der DE10 2006 012487 A1 ist ein verbessertes Ablöseverfahren offenbart, bei dem ein Druckmedium nach dem Durchbohren des Außenbehälters in den Zwischenraum zwischen dem Außenbehälter und dem Innenbeutel eingeführt wird, nach dem die Behälteröffnung abgedichtet ist, wobei das Einführen des Druckmediums in den Zwischenraum gestoppt wird, wenn in dem Innenbeutel ein vorbestimmter zweiter Druckschwellwert erreicht ist, wobei nach Druckentlastung ein Druckmedium in den Innenbeutel eingeführt wird, um den Innenbeutel wieder an die Behälterwand anzulegen.

Die US 10 364 087 offenbart ein Verfahren, bei dem in der Schicht des Innenbeutels, die dem Außenbehälter zugewandt ist, und/oder in die Schicht des Außenbehälters, die dem Innenbeutel zugewandt ist, Mikrokörper aus einem bei der Herstellung des Behälters nicht schmelzenden Material integriert sind, die Unebenheiten auf der Oberfläche der Schicht erzeugen. Diese Mikrokörper sind bevorzugt Glaskugeln.

Die EP 2 851 308 B1 offenbart einen coextrudierten blasgeformten Mehrschichtbehälter, der als innerste Schicht ein Gemisch aus einem Ethylen-Phenylalkohol-Copolymer und einem Weichharz enthält. Diese innerste Schicht ist fest mit der Schicht des Außenbehälters verbunden und verleiht dem Mehrschichtbehälter eine besonders hohe Schlagfertigkeit.

Die bisher bekannten Verfahrensschritte zum Ablösen des Innenbeutels von der Behälterwand und des anschließenden Anlegens an die Wand des Außenbehälters sind aufwendig und erhöhen die Herstellungszeit gebrauchsfähiger Behälter der betrachteten Art.

Der vorliegenden Erfindung liegt die Aufgabe zugrunde, für dieses Problem eine bessere Lösung anzugeben.

Die Erfindung betrifft auch einen Behälter, bestehend aus einem steifen Außenbehälter und einem verformbaren Innenbeutel, der an dem Außenbehälter anliegt, mit einer Quetschnaht am Boden des Behälters, in der die verschweißte Bodennaht des Innenbehälters gehalten ist, wobei der Innenbeutel aus wenigstens zwei Schichten besteht und bei seiner Herstellung im Coextrusionsverfahren nicht mit dem Außenbehälter verschweißt ist. Bei diesem Behälter soll der Innenbeutel lose, d.h. im wesentlichen ohne Adhäsion, an dem Außenbehälter anliegen, ohne dass in der Wand des Außenbehälters Druckausgleichslöcher ausgebildet sind.

Diesen Aufgaben werden erfindungsgemäß durch die Merkmale der Patentansprüche 1 und 11 gelöst.

Vorteilhafte Ausgestaltungen der Erfindung sind in den Unteransprüchen gekennzeichnet.

Das erfindungsgemäße Verfahren sieht vor, dass der zweite thermoplastische Kunststoff, der die Außenschicht des Innenbeutels bildet, die an dem Außenbehälter anliegt, im erhärteten Zustand eine raue Oberfläche mit mikroskopisch kleinen Erhebungen und Vertiefungen aufweist, so dass die Adhäsionskräfte zwischen dem Außenbehälter und dem Innenbeutel minimiert sind.

Hierzu wird dem zweiten Schneckenförderer ein Materialcompound zugeführt, das aus einem Gemisch von EVOH und einem Kunststoff mit elastischen Eigenschaften besteht. Der Materialanteil aus EVOH hat die Eigenschaft, beim Erstarren bzw. Erkalten die raue Oberfläche zu bilden, wobei dieses Material die weitere Eigenschaft einer verhältnismäßig großen Steifigkeit hat, so dass es für sich alleine nicht für einen leicht verformbaren Innenbeutel geeignet ist. Aus diesem Grund wird der Materialanteil EVOH mit einem gleichmäßig verteilten Kunststoff mit elastischen Eigenschaften gemischt.

Mit besonderem Vorteil wird für dieses elastische Material Surlyn verwendet, das in der dispersen Phase in dem EVOH vorliegt.

Nach einem weiteren Vorschlag der Erfindung kann das Surlyn (Ionomer) mit sehr kleinen Glaskugeln gemischt sein, die eine nicht-glatte Oberfläche des Surlyns mit geringen Adhäsionskräften erzeugen.

Für die zweite Materialschicht haben sich verschiedene Konzentrationsvarianten als geeignet herausgestellt. Hierbei werden besonders hervorgehoben 85 EVOH 15 SY oder 52 EVOH oder 75 EVOH25SY oder 75 PCTG25SY, wobei auch weitere ähnliche Materialgemische zu dem genannten Zweck verwendbar sind.

Außerdem sieht das erfindungsgemäße Verfahren vor, dass die dritte Materialschicht, die die Innenschicht des Innenbeutels bildet und demnach die produktberührende Schicht ist, aus Surlyn, Purell oder Dowlex besteht, ohne dass diese Aufzählung abschließend ist. Die dritte Schicht kann bei der Coextrusion mit der zweiten Schicht verschweißt sein, wobei dem Innenbeutel auch noch eine vierte Schicht beim Extrusionsvorgang über einen zugehörigen vierten Schneckenförderer hinzugefügt werden kann.

Nach dem Aufblasen des Vorformlings zum (fast) fertigen Behälter wird die Blasform geöffnet, wobei die Quetschnaht des Außenbehälters wenigstens teilweise aufgezogen bzw. aufgerissen wird, womit ein Luftschlitz zum Druckausgleich gebildet ist, der beim fortlaufenden Gebrauch des Behälters größer wird. Hierdurch ist das Ablösen des mit sehr geringer Adhäsion an dem Außenbehälter haftenden Innenbeutels möglich. Hierzu kann der aus der Blasform entnommene Behälter seitlich eingedrückt werden, vorzugsweise mit zwei einander gegenüberliegenden Stempeln, wodurch sich der Innenbeutel infolge seiner Steifigkeit schlagartig von dem Außenbehälter ablöst. Dieser erfindungsgemäße Ablösevorgang ist auch akustisch wahrnehmbar, indem ein lautes "Plopp" erzeugt wird. Alternativ kann der Behälter durch ein Klemmförderband geführt werden.

Dieser Ablösevorgang ist im Vergleich zur herkömmlichen Vorgehensweise schnell und einfach durchzuführen, womit die Herstellungszeit gebrauchsfähiger Behälter signifikant verringert ist.

Bei dem erfindungsgemäßen Behälter hat die dem Außenbehälter zugewandte Außenschicht des Innenbeutels eine raue Oberfläche mit mikroskopisch kleinen Erhebungen und Vertiefungen, die mit dem bloßen Auge nicht wahrnehmbar sind. Die Quetschnaht des Außenbehälters ist wenigstens teilweise geöffnet, so dass Luft beidseitig in den Zwischenraum zwischen dem Außenbehälter und dem Innenbeutel eintreten kann.

Der Innenbeutel kann sich auch allein durch den Unterdruck bei der Abgabe von Behälterinhalt von dem Außenbehälter ablösen.

Besonders geeignete Materialien für den Außenbehälter des erfindungsgemäßen Behälters sind PP oder PCTG oder PET-G oder HDPE oder PCR oder HDPE, ohne dass diese Aufzählung abschließend ist. Der erfindungsgemäße Behälter hat vorzugsweise eine Flaschenform.

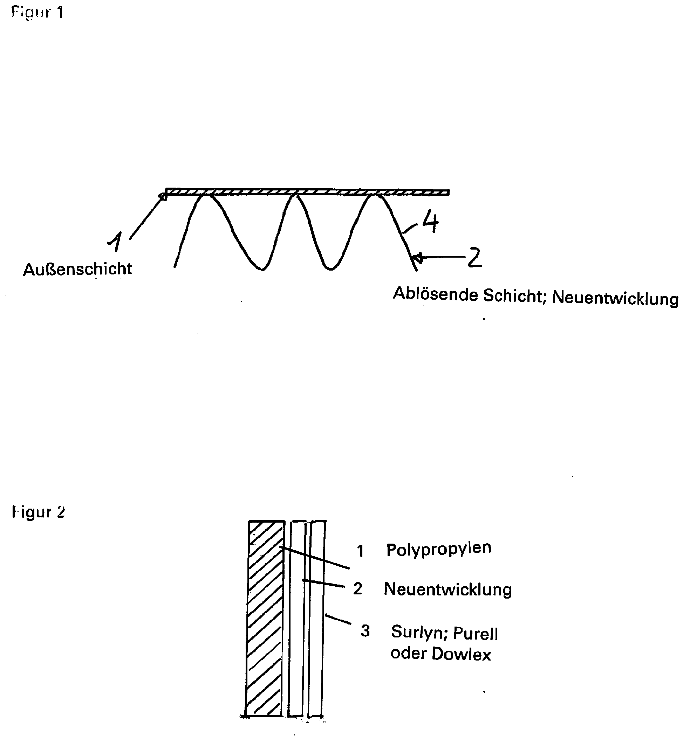

Figur 1 zeigt auf rein schematische Weise und in stark vergrößertem Maßstab die Schicht 1 des Außenbehälters und eine Oberfläche 4 der leicht abzulösenden Außenschicht 2 des Innenbeutels. Die schematische Figur 2 zeigt die extrudierten Schichten des Vorformlings, nämlich Schicht aus 1 aus Polypropylen, Schicht 2 aus einem EVOH/Surlyn Gemisch und Innenschicht 3 des Innenbeutels aus Surlyn oder Purell oder Dowlex, ohne dass diese Auflistung vollständig ist.

Die Materialverteilung einer bevorzugten Ausführungsform des Behälters ist: ca. 80 % Außenbehälter, 5 % Außenschicht des Innenbeutels, 15 % produktberührende Innenschicht des Innenbeutels.

## Patentansprüche

1. Verfahren zur Herstellung eines Behälters bestehend aus einem steifen Außenbehälter und einem verformbaren Innenbeutel, wobei ein erster Schneckenförderer einen ersten thermoplastischen Kunststoff für den Außenbehälter und wenigstens ein zweiter und ein dritter Schneckenförderer wenigstens einen zweiten und dritten thermoplastische Kunststoff für den Innenbeutel einem Extruder zuführen, der einen aus wenigstens der ersten, zweiten und dritten Schicht bestehenden Vorformling coextrudiert, der zwischen den geöffneten Hälften einer Blasform angeordnet wird, wobei die Blasform geschlossen wird, wenn der Vorformling die zur Herstellung des Behälters erforderliche Länge hat, wobei Überschussmaterial im Bodenbereich des herzustellenden Behälters abgequetscht und ein Steg aus Material des Außenbehälters ausgebildet wird, in dem die verschweißte Bodennaht des Innenbeutels eingeklemmt ist, und wobei der Vorformling durch ein Druckmedium zur Anlage an die Wandung der Blasform aufgeblasen, das überschüssige Material unter der Schweißnaht abgeschlagen und der Behälter aus der Blasform entnommen wird,
**dadurch gekennzeichnet,**
**dass** der zweite thermoplastischen Kunststoff, der die Außenschicht (2) des Innenbeutels bildet, die an dem Außenbehälter (1) anliegt, aus einem Gemisch aus EVOH und einem Kunststoff mit elastischen Eigenschaften besteht, das die Eigenschaft hat, dass es im erhärteten Zustand eine raue Oberfläche (4) mit mikroskopisch kleinen Erhebungen und Vertiefungen aufweist, so dass die Adhäsionskräfte zwischen dem Außenbehälter und dem Innenbeutel minimiert sind.

2. Verfahren nach Anspruch 1,
**dadurch gekennzeichnet,**
**dass** das Material mit den elastischen Eigenschaften Surlyn^{®} ist.

3. Verfahren nach Anspruch 2,
**dadurch gekennzeichnet,**
**dass** das Surlyn^{®} mit kleinen Glaskugeln gemischt ist.

4. Verfahren nach einem der Ansprüche 1 bis 3,
**dadurch gekennzeichnet,**
**dass** das Materialgemisch der zweiten Schicht aus 85 EVOH15SY besteht.

5. Verfahren nach einem der Ansprüche 1 bis 3,
**dadurch gekennzeichnet,**
**dass** das Materialgemisch der zweiten Schicht aus 52 EVOH besteht.

6. Verfahren nach einem der Ansprüche 1 bis 3,
**dadurch gekennzeichnet,**
**dass** das Materialgemisch der zweiten Schicht aus 75 EVOH25SY besteht.

7. Verfahren nach einem der Ansprüche 1 bis 3,
**dadurch gekennzeichnet,**
**dass** das Materialgemisch der zweiten Schicht aus 75 PCTG25SY besteht.

8. Verfahren nach einem der Ansprüche 1 bis 7,
**dadurch gekennzeichnet,**
**dass** die dritte Schicht, die die Innenschicht des Innenbeutels bildet, aus Surlyn^{®}, Purell^{®} oder Dowlex^{®} besteht.

9. Verfahren nach einem der Ansprüche 1 bis 8,
**dadurch gekennzeichnet,**
**dass** der Behälter nach der Entnahme aus der Blasform durch Stempel oder ein Klemmförderband seitlich eingedrückt wird, wodurch sich der Innenbeutel von dem Außenbehälter ablöst.

10. Verfahren nach Anspruch 9,
**dadurch gekennzeichnet,**
**dass** der Ablösevorgang akustisch wahrnehmbar ist.

11. Behälter, bestehend aus einem steifen Außenbehälter und einem verformbaren Innenbeutel, der an dem Außenbehälter anliegt, ohne mit ihm verschweißt zu sein, mit einer Quetschnaht am Boden des Außenbehälters, in der die verschweißte Bodennaht des Innenbeutels gehalten ist, wobei der Innenbeutel aus wenigstens zwei Schichten besteht
**dadurch gekennzeichnet,**
**dass** die dem Außenbehälter zugewandte Schicht des Innenbeutels aus einem Gemisch aus EVOH und einem Kunststoff mit elastischen Eigenschaften besteht, das eine raue Oberfläche mit mikroskopisch kleinen Erhebungen und Vertiefungen hat, und dass die Quetschnaht des Außenbehälters wenigstens teilweise geöffnet ist, so dass Luft in den Zwischenraum zwischen dem Außenbehälter und dem Innenbeutel eintreten kann.

## Claims

1. A method of manufacturing a container consisting of a stiff outer container and a deformable inner bag wherein a first screw conveyor supplies a first thermoplastic plastic material for the outer container and at least one second and one third screw conveyor supply at least one second and third thermoplastic plastic materials for the inner bag to an extruder, which coextrudes a preform consisting of at least the first, second and third layers, which is arranged between the open halves of a blow mould, wherein the blow mould is closed when the preform has the length necessary for the manufacture of the container, wherein excess material is squeezed out in the base region of the container to be manufactured and a web is formed from material of the outer container, in which the welded base seam of the inner bag is clamped, and wherein the preform is inflated by a pressure medium into engagement with the wall of the blow mould, the excess material below the weld seam is severed and the container is removed from the blow mould, **characterised in that** the second thermoplastic plastic material, which forms the outer layer (2) of the inner bag, which engages the outer container (1), consists of a mixture of EVOH and a plastic material with elastic properties, which has the property that, in the hardened state, it has a rough surface (4) with microscopically small protuberances and recesses so that the adhesive forces between the outer container and the inner bag are minimised.

2. A method as claimed in Claim 1, **characterised in that** the material with the elastic properties is Surlyn^{®}.

3. A method as claimed in Claim 2, **characterised in that** the Surlyn^{®} is mixed with small glass balls.

4. A method as claimed in one of Claims 1 to 3, **characterised in that** the material mixture of the second layer consists of 85 EVOH15SY.

5. A method as claimed in one of Claims 1 to 3, **characterised in that** the material mixture of the second layer consists of 52 EVOH.

6. A method as claimed in one of Claims 1 to 3, **characterised in that** the material mixture of the second layer consists of 75 EVOH25SY.

7. A method as claimed in one of Claims 1 to 3, **characterised in that** the material mixture of the second layer consists of 75 PCTG25SY.

8. A method as claimed in one of Claims 1 to 7, **characterised in that** the third layer, which forms the inner layer of the inner bag, consists of Surlyn^{®}, Purell^{®} or Dowlex^{®}.

9. A method as claimed in one of Claims 1 to 8, **characterised in that** after removal from the blow mould the container is pressed in laterally by punches or a clamping conveyor belt, whereby the inner bag peels away from the outer container.

10. A method as claimed in Claim 9, **characterised in that** the peeling process is acoustically perceptible.

11. A container consisting of a stiff outer container and a deformable inner bag, which engages the outer container without being welded to it, with a pinch seam at the base of the outer container, in which the welded base seam of the inner bag is held, wherein the inner bag consists of at least two layers, **characterised in that** the layer of the inner bag directed towards the outer container consists of a mixture of EVOH and a plastic material with elastic properties, which has a rough surface with microscopically small protuberances and recesses and that the pinch seam of the outer container is at least partially open so that air can enter into the gap between the outer container and the inner bag.

## Revendications

1. Procédé de fabrication d'un récipient constitué d'un récipient extérieur rigide et d'un sachet intérieur déformable, dans lequel un premier convoyeur à vis sans fin amène un premier plastique thermoplastique pour le récipient extérieur et au moins un deuxième et un troisième convoyeur à vis sans fin amènent au moins un deuxième et troisième plastique thermoplastique pour le sachet intérieur à une extrudeuse qui coextrude une préforme constituée d'au moins la première, deuxième et troisième couche, qui est disposée entre les moitiés ouvertes d'un moule de soufflage, dans lequel le moule de soufflage est fermé lorsque la préforme a la longueur nécessaire à la fabrication du récipient, dans lequel le matériau excédentaire est écrasé dans la zone de fond du récipient à fabriquer et une nervure est réalisée en matériau du récipient extérieur, dans laquelle est coincée la soudure de fond soudée du sachet intérieur, et dans lequel la préforme est soufflée par un milieu sous pression pour l'application sur la paroi du moule de soufflage, le matériau excédentaire sous le cordon de soudure est découpé et le récipient est retiré du moule de soufflage,
**caractérisé en ce**
**que** le deuxième plastique thermoplastique, qui forme la couche extérieure (2) du sachet intérieur qui s'applique sur le récipient extérieur (1), est constitué d'un mélange d'EVOH et d'un plastique aux propriétés élastiques qui a la propriété qu'il présente à l'état durci une surface rugueuse (4) avec des bosses et des creux microscopiques de sorte que les forces d'adhérence entre le récipient extérieur et le sachet intérieur sont minimisées.

2. Procédé selon la revendication 1,
**caractérisé en ce**
**que** le matériau possède les propriétés élastiques de Surlyn^{®}.

3. Procédé selon la revendication 2,
**caractérisé en ce**
**que** le Surlyn^{®} est mélangé à de petites billes de verre.

4. Procédé selon l'une quelconque des revendications 1 à 3,
**caractérisé en ce**
**que** le mélange de matériau de la deuxième couche est constitué de 85 EVOH15SY.

5. Procédé selon l'une quelconque des revendications 1 à 3,
**caractérisé en ce**
**que** le mélange de matériau de la deuxième couche est constitué de 52 EVOH.

6. Procédé selon l'une quelconque des revendications 1 à 3,
**caractérisé en ce**
**que** le mélange de matériau de la deuxième couche est constitué de 75 EVOH25SY.

7. Procédé selon l'une quelconque des revendications 1 à 3,
**caractérisé en ce**
**que** le mélange de matériau de la deuxième couche est constitué de 75 PCTG25SY.

8. Procédé selon l'une quelconque des revendications 1 à 7,
**caractérisé en ce**
**que** la troisième couche, qui forme la couche intérieure du sachet intérieur, est constituée de Surlyn^{®}, Purell^{®} ou Dowlex^{®}.

9. Procédé selon l'une quelconque des revendications 1 à 8,
**caractérisé en ce**
**qu'**après le retrait du moule de soufflage, le récipient est comprimé latéralement par poinçon ou un convoyeur à pince, ce qui a pour effet que le sachet intérieur se détache du récipient extérieur.

10. Procédé selon la revendication 9,
**caractérisé en ce**
**que** le processus de détachement est audible.

11. Récipient, constitué d'un récipient extérieur rigide et d'un sachet intérieur déformable, qui s'applique sur le récipient extérieur sans y être soudée, avec une soudure d'écrasement au fond du récipient extérieur dans laquelle est maintenue la soudure de fond soudé du sachet intérieur, dans lequel le sachet intérieur est constitué d'au moins deux couches
**caractérisé en ce**
**que** la couche du sachet intérieur orientée vers le récipient extérieur est constituée d'un mélange d'EVOH et d'un plastique aux propriétés élastiques, qui présente une surface rugueuse avec des bosses et des creux microscopiques, et que la soudure d'écrasement du récipient extérieur est au moins partiellement ouverte de sorte que de l'air puisse pénétrer dans l'espace intermédiaire entre le récipient extérieur et le sachet intérieur.
